(19) Europäisches Patentamt / European Patent Office / Office européen des brevets

(11) **EP 2 766 694 B1**

(12) **FASCICULE DE BREVET EUROPEEN**

(45) Date de publication et mention de la délivrance du brevet:
**16.12.2015  Bulletin 2015/51**

(21) Numéro de dépôt: **12772920.0**

(22) Date de dépôt: **10.10.2012**

(51) Int Cl.:
*G01J 1/42* (2006.01)       *B64F 1/20* (2006.01)
*H04N 5/30* (2006.01)       *G01C 9/06* (2006.01)
*G05D 1/06* (2006.01)

(86) Numéro de dépôt international:
**PCT/EP2012/070080**

(87) Numéro de publication internationale:
**WO 2013/053773 (18.04.2013 Gazette 2013/16)**

(54) **EQUIPEMENT DE MESURE POUR LE CONTRÔLE D'UN INDICATEUR DE TRAJECTOIRE D'APPROCHE POUR L'ATTERRISSAGE D'UN AVION, ET DISPOSITIF DE CONTRÔLE CORRESPONDANT**

MESSVORRICHTUNG ZUR ÜBERPRÜFUNG DES ANFLUGBAHNINDIKATORS ZUM LANDEN EINES FLUGZEUGS UND ENTSPRECHENDS ÜBERPRÜFUNGSVORRICHTUNG

MEASURING APPARATUS FOR CHECKING THE APPROACH PATH INDICATOR FOR THE LANDING OF AN AIRPLANE, AND CORRESPONDING CHECKING DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **10.10.2011  FR 1159139**

(43) Date de publication de la demande:
**20.08.2014  Bulletin 2014/34**

(73) Titulaire: **FB Technology**
**91000 Evry (FR)**

(72) Inventeurs:
• **LE CAM, Lionel**
  **91370 Verrieres Le Buisson (FR)**
• **MORANCAY, Basile**
  **78370 Saint Arnoud En Yvelines (FR)**
• **IRAQUI-HOUSSAINI, Amine**
  **94800 Villejuif (FR)**
• **LONGY, Jean-Etienne**
  **78000 Versailles (FR)**

(74) Mandataire: **Vidon Brevets & Stratégie**
**16B, rue de Jouanet**
**BP 90333**
**35703 Rennes Cedex 7 (FR)**

(56) Documents cités:
**US-A1- 2011 032 519**

EP 2 766 694 B1

**Description**

**1. Domaine de l'invention**

La présente invention concerne un équipement de mesure destiné à vérifier le bon fonctionnement d'un indicateur visuel de pente d'approche, ou de trajectoire d'approche, destiné à permettre à des avions effectuant l'approche d'une piste pour y atterrir d'être guidés sur la trajectoire la plus adaptée pour l'atterrissage.

L'invention concerne également le dispositif de contrôle mettant en oeuvre cet équipement de mesure.

L'invention concerne plus particulièrement les dispositifs permettant le contrôle des systèmes connus sous le nom "PAPI" (Precision Approach Path Indicator) ou "APAPI" (Abbreviated Precision Approach Path Indicator).

**2. Art antérieur**

Indicateurs visuels de pente d'approche

Les pistes d'aéroport sont entourées de différents indicateurs visuels donnant aux pilotes des avions les indications leurs permettant d'y atterrir dans de bonnes conditions.

Parmi ces indicateurs, des indicateurs visuels de pente d'approche permettent de donner les indications nécessaires pour placer l'avion sur la pente d'approche idéale par rapport à la piste, pour y atterrir. Cette aide visuelle à l'atterrissage est opérationnelle de jour comme de nuit.

Parmi les indicateurs visuels de pente d'approche, on connaît notamment les dispositifs "PAPI" (acronyme pour "Precision Approach Path Indicator" signifiant "indicateur de trajectoire d'approche de précision") et les dispositifs appelés "APAPI" (acronyme pour "Abbreviated Precision Approach Path Indicator" signifiant "indicateur de trajectoire d'approche de précision simplifié").

Les dispositifs "PAPI" comportent généralement quatre feux identiques (appelés par la suite « feux PAPI »), émettant chacun de la lumière rouge en dessous d'un certain angle et blanche au dessus de cet angle. Ces quatre feux sont portés par une rampe horizontale située à côté de la piste, généralement à gauche, au niveau du point d'atterrissage visé. Les quatre feux sont placés sur la rampe de telle sorte que le pilote d'un avion approchant de la piste voit les quatre points lumineux les uns à côté des autres.

Tous les feux sont positionnés avec des angles de site différents, l'angle étant croissant du feu extérieur, le plus éloigné de la piste, au feu le plus proche de la piste. Par « angle de site », on désigne l'angle que forme l'axe optique du faisceau émis par le feu, par lequel passe la transition entre la partie blanche et la partie rouge du faisceau, avec l'horizontale.

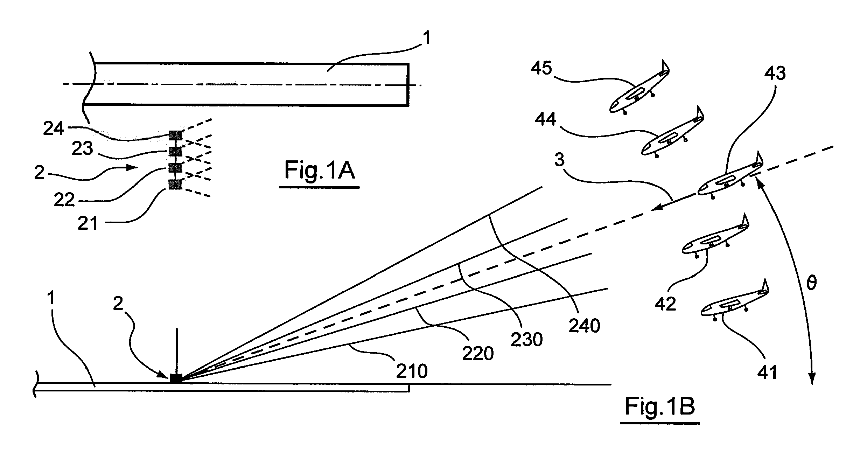

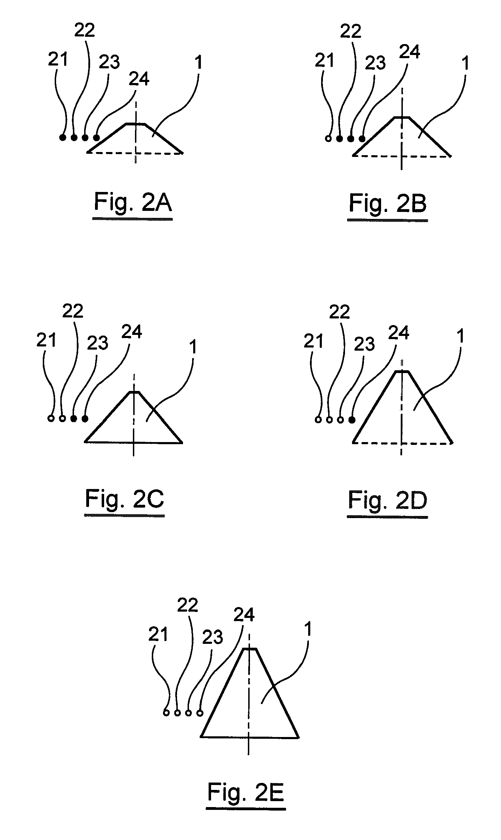

L'écart entre les angles de site de deux feux consécutifs est généralement de vingt minutes d'arc. La transition entre le faisceau de lumière rouge émis par chaque feu en dessous d'un certain angle et le faisceau de lumière blanche émis par le feu au-dessus de cet angle étant très précise, ne dépassant normalement pas trois minutes d'arc, le pilote d'un avion approchant de la piste voit chacun des feux de couleur rouge ou blanche, en fonction de son altitude. Les figures 1A, 1B et 2A à 2E représentent ainsi le fonctionnement d'un ensemble de feux PAPI.

La figure 1A est une vue de dessus schématique d'une extrémité d'une piste 1 d'aéroport. A côté de cette piste, au niveau où il est prévu que les avions atterrissent, est placé un dispositif PAPI 2, qui comprend quatre feux 21, 22, 23 et 24 portés par une même rampe et émettant chacun des faisceaux lumineux orientés dans la direction des avions s'approchant de la piste.

La figure 1B est une vue de côté schématique de la piste 1 et du dispositif PAPI 2. Les axes optiques 210, 220, 230 et 240, associés respectivement aux faisceaux émis par les feux 21, 22, 23 et 24 du dispositif PAPI 2 sont représentés sur cette figure. Comme le montre cette figure, chacun des feux 21 à 24 présente un angle de site différent, qui est croissant entre le feu 21 et le feu 24.

Les angles de site de ces axes optiques sont répartis autour d'un angle correspondant à la trajectoire optimale d'approche 3 d'un avion s'apprêtant à atterrir sur la piste.

Par exemple, en considérant un angle d'approche $\theta$ correspondant à la trajectoire optimale d'approche 3, le feu 21 est positionné de telle sorte que son axe optique 210 forme un angle de site inférieur de 30 minutes d'arc par rapport à l'angle $\theta$, le feu 22 est positionné de manière à ce que son axe optique 220 forme un angle de site inférieur de 10' à celui de l'angle $\theta$, le feu 23 est positionné de manière à ce que son axe optique 230 forme un angle supérieur de 10' par rapport à l'angle $\theta$, et le feu 24 est positionné de manière à ce que son axe optique 240 forme un angle supérieur de 30' par rapport à un angle $\theta$. Il est à noter que les angles représentés sur la figure 1B ne correspondent pas aux angles réels, mais ont été fortement exagérés afin de faciliter la lecture de la figure.

Le pilote d'un avion approchant de la piste d'aéroport voit chaque feu PAPI de couleur blanche ou rouge selon qu'il est au dessus ou en dessous de l'axe optique de ce feu. Les figures 2A à 2E sont des représentations schématiques de la vue qu'un pilote a de la piste 1 et du dispositif PAPI qui lui est associé dans les différentes configurations possibles.

La figure 2A représente la vue depuis un avion 41 situé sous les axes optiques de tous les feux PAPI. Le pilote de cet avion voit les quatre feux 21 à 24 du dispositif PAPI 2 de couleur rouge, ce qui lui indique qu'il est trop bas par rapport à la trajectoire optimale d'approche 3.

La figure 2B représente la vue depuis un avion 42 situé au-dessus de l'axe optique 210 du feu 21 mais en dessous des axes optiques des feux 22 à 24. Le pilote de cet avion voit le feu 21 blanc et les feux 21 à 24 rouge, ce qui lui indique qu'il est légèrement trop bas par rapport à la trajectoire optimale d'approche 3.

La figure 2C représente la vue depuis un avion 43 situé au-dessus des axes optiques 210 et 220 des feux 21 et 22 mais en dessous des axes optiques 230 à 240 des feux 23 et 24. Le pilote de cet avion voit les feux 21 et 22 blancs et les feux 23 et 24 rouges, ce qui lui indique que son avion est sur à la trajectoire optimale d'approche 3.

La figure 2D représente la vue depuis un avion 44 situé au-dessus des axes optiques 210, 220, 230 des feux 21, 22 et 23, mais en dessous de l'axe optique 240 du feu 24. Le pilote de cet avion voit les feux 21 et 23 blancs et le feu 24 rouge, ce qui lui indique que son avion est légèrement au-dessus de la trajectoire optimale d'approche 3.

La figure 2E représente la vue depuis un avion 45 situé au-dessus des axes optiques des feux 21 à 24. Le pilote de cet avion voit les 4 lampes 21 à 24 du dispositif PAPI de couleur blanche, ce qui lui indique que son avion est trop haut par rapport à la trajectoire optimale d'approche 3.

Ainsi, le dispositif PAPI permet facilement de donner une indication fiable aux pilotes concernant leur altitude par rapport à une trajectoire optimale d'approche.

Il est à noter que, dans certains cas, des dispositifs PAPI symétriques peuvent être mis en place de part et d'autre de la piste. Un dispositif simplifié appelé APAPI peut être également mis en oeuvre sur d'autres pistes. Seuls deux feux, du même type que ceux utilisés dans les dispositifs PAPI, sont mis en oeuvre dans ce dispositif APAPI, et sont inclinés de tel sorte que leurs axes optiques soient situés respectivement plus haut et plus bas que la trajectoire optimale d'approche.

Architecture d'un feu PAPI

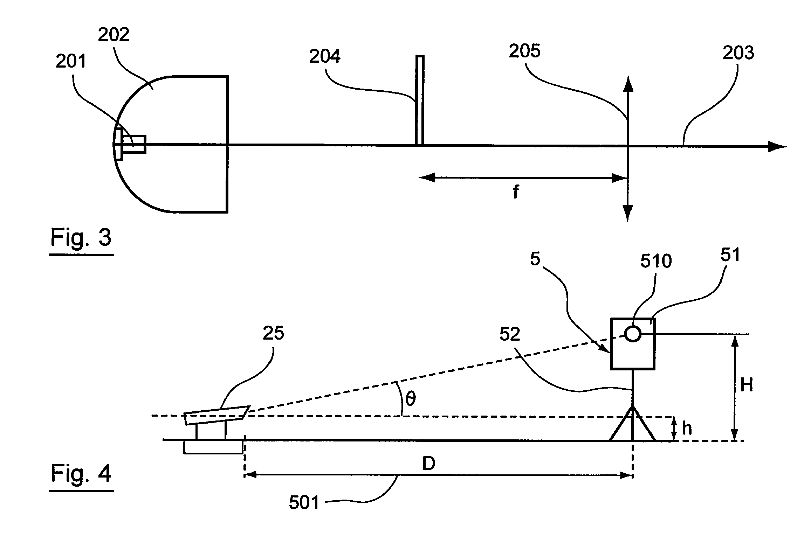

La figure 3 représente une architecture typique d'un projecteur d'un feu PAPI. Ce projecteur comprend une lampe halogène 201 à lumière blanche et un réflecteur 202 permettant d'orienter le faisceau de lumière émis dans la direction représentée par l'axe optique 203. Les rayons lumineux situés au-dessus de cet axe optique traversent un filtre rouge 204 placé dans le plan focal d'une lentille 205 formant la sortie du projecteur. Les rayons lumineux sont ensuite collimatés par la lentille 205 générant ainsi une transition de couleur (blanche/rouge). Les différents éléments du projecteur (réflecteur, lampe, lentille, filtre rouge) doivent être alignés parfaitement de façon à ce que l'axe optique de la lentille coïncide avec l'axe mécanique du système.

En cas de mauvais alignement du filtre rouge, la transition entre les couleurs blanche et rouge peut être décalée verticalement vers le haut ou le bas, ou peut être inclinée. En tous ces cas, ce mauvais alignement fausse l'information délivrée au pilote ce qui induit un risque pour la sécurité des avions.

Par ailleurs, quand le filtre rouge 204 est décalé longitudinalement par rapport au plan focal de la lentille de sortie 205, la transition de couleur entre le blanc et rouge dans le faisceau lumineux émis par le feu n'est pas parfaitement collimatée, ce qui entraîne une zone de transition entre les deux couleurs supérieure à celle imposée par les normes.

Enfin, l'orientation précise du projecteur et de la lampe, la puissance du faisceau et les caractéristiques chromatiques des zones blanches et rouges de chaque faisceau doivent également être réglés pour délivrer une information précise et exacte au pilote.

Pour effectuer un réglage précis des différentes caractéristiques de chaque projecteur d'un système PAPI ou système APAPI, il est important de pouvoir mesurer avec précision les caractéristiques du faisceau émis, afin de contrôler leur conformité aux normes en vigueur. De tels contrôles à intervalles réguliers sont imposés par les autorités de tutelle des aéroports.

Plusieurs méthodes sont connues pour contrôler les indicateurs de trajectoire d'approche. Selon l'une d'entre elle, un théodolite placé au niveau d'un feu mesure la position d'un avion se déplaçant dans la zone d'approche de la piste, et dont le pilote observe la couleur des feux. Selon une autre méthode connue, ce théodolite mesure la position d'une mire portée quelques mètres devant les feux, au niveau des transitions de couleur. Ces méthodes sont relativement compliquées à mettre en oeuvre et ne donne pas réellement satisfaction.

On connaît également, du document US 2011/0032519, un système de détection d'inclinaison de sources lumineuses pouvant être placé devant un feu de type PAPI pour mesurer son inclinaison. Ce système est relativement complexe dans la mesure où il nécessite deux caméras, l'une permettant un réglage grossier de l'orientation du système pour se positionner dans le faisceau, avant que la deuxième effectue les mesures. Par ailleurs, s'il permet une mesure précise de l'angle d'inclinaison du feu, ne permet cependant pas de mesurer de façon suffisamment efficace l'intensité lumineuse de ce feu, ce qui est pourtant imposé par les normes en vigueur. En effet, la caméra utilisée pour faire cette mesure ne donne qu'une évaluation imprécise de cette luminosité.

**3. Objectif de l'invention**

La présente invention a pour objectif de palier ces inconvénients de l'art antérieur.

En particulier, la présente invention a pour objectif de permettre une mesure précise et rapide des caractéristiques des faisceaux lumineux émis par les feux d'un dispositif PAPI, afin de permettre le réglage efficace et précis des caractéristiques de ces feux.

Un objectif particulier de l'invention est de permettre une mesure précise des caractéristiques d'intensité lumineuse des feux du dispositif PAPI.

**4. Exposé de l'invention**

Ces objectifs ainsi que d'autres qui apparaîtront plus clairement par la suite sont atteints à l'aide d'un équipement mobile de mesure de caractéristiques d'un faisceau lumineux émis par un feu, présentant au moins deux portions angulaires de couleurs différentes, ledit équipement comprenant un support permettant de faire varier la position d'un ensemble de mesure, dans lequel, selon l'invention, ledit ensemble de mesure comprend une unique caméra orientable, équipée d'un zoom pouvant prendre au moins deux positions :

- une première position de faible grossissement, offrant un grand angle de champs, permettant de détecter la position du feu pour orienter précisément la caméra dans sa direction ;
- une seconde position de fort grossissement, permettant de réaliser une image du feu permettant d'analyser les caractéristiques d'un faisceau lumineux émis par un feu.

Ainsi, cette caméra unique de l'équipement mobile peut effectuer deux taches bien distinctes, l'une consistant à repérer le feu pour permettre le positionnement précis de l'ensemble de mesure et de la caméra, et l'autre consistant en une prise d'image du feu permettant une analyse précise.

Ces deux taches étaient remplies dans l'art antérieur par deux composants différents, l'homme du métier pensant que les caractéristiques demandées à chacun des deux composants étaient contradictoires entre elles. Il en résultait une grande complexité des systèmes de l'art antérieur.

Au contraire, l'équipement mobile selon l'invention est de construction beaucoup plus simple.

De façon avantageuse, l'ensemble de mesure comprend au moins une plate-forme inertielle fixée à ladite caméra, permettant d'en mesurer l'inclinaison.

Cette plate-forme inertielle, qui peut éventuellement être remplacée par un simple gyroscope, permet une mesure particulièrement précise de l'angle formé par la caméra, et donc, quand la caméra est sur l'axe optique d'un faisceau lumineux et orientée vers le feu, de l'orientation de ce faisceau.

De façon préférentielle, ledit ensemble de mesure comprend au moins un capteur de luminosité distinct de ladite caméra.

Cette combinaison d'une caméra et de capteurs de luminosité dans l'ensemble de mesure permet de mesurer de façon précise et fiable les caractéristiques photométriques du faisceau lumineux.

Avantageusement, ledit ensemble de mesure comprend un boîtier contenant ladite caméra.

De préférence, lesdits capteurs de luminosité sont placés sur des équerres rétractables portées par ledit boîtier.

Ces capteurs peuvent ainsi être répartis dans différents points du faisceau lumineux. Le boîtier étant mobile, il peut entraîner les capteurs dans différentes directions pour prendre une grande quantité de mesures, permettant l'établissement d'un diagramme d'intensité (ou de luminance) du feu contrôlé.

Avantageusement, ledit support est constitué d'un pied portant un système de déplacement motorisé dudit ensemble de mesure.

Ce système de déplacement motorisé permet le déplacement de l'ensemble de mesure dans un plan sensiblement perpendiculaire à l'axe optique du faisceau.

La présente invention concerne également un dispositif de contrôle d'un feu comprenant :

- un équipement mobile de mesure selon l'une quelconque des revendications précédentes, et
- un ordinateur permettant le traitement des données de l'équipement mobile de mesure et une interface avec un opérateur.

Avantageusement, ledit équipement mobile de mesure et ledit ordinateur communiquent par une liaison radio. Cette liaison radio peut être par exemple de type wifi.

De préférence, ledit ordinateur accède à une base de données comprenant des informations concernant chacun des feux à contrôler.

## 5. Liste des figures

La présente invention sera mieux comprise à la lecture de la description suivante d'un mode de réalisation préféré, donné à titre illustratif et non limitatif, et accompagné de figures parmi lesquelles :

- les figures 1A et 1B, qui ont été commentées ci-dessus, représentent schématiquement une piste d'aéroport équipée d'un système PAPI ;
- les figures 2A à 2E, qui ont été commentées ci-dessus, représentent schématiquement la vue depuis un avion approchant d'une piste d'aéroport équipé d'un système PAPI ;
- la figure 3, qui a été commentée ci-dessus, représente schématiquement les composants d'un feu PAPI ;
- la figure 4 est une vue de coté d'un feu PAPI devant lequel est positionné un équipement de mesure selon un mode de réalisation de l'invention ;
- les figures 5A et 5B représentent respectivement en vue de face et en vue arrière l'équipement de mesure de la figure 4 ;
- la figure 6 représente une caméra du type de celle intégrée dans le boîtier de l'équipement de mesure de la figure 4 ;
- la figure 7 est une représentation schématique de l'architecture d'un système de contrôle d'un indicateur de trajectoire d'approche selon un mode de réalisation de l'invention.

## 6. Description d'un mode de réalisation

### Position de l'équipement de mesure face au feux

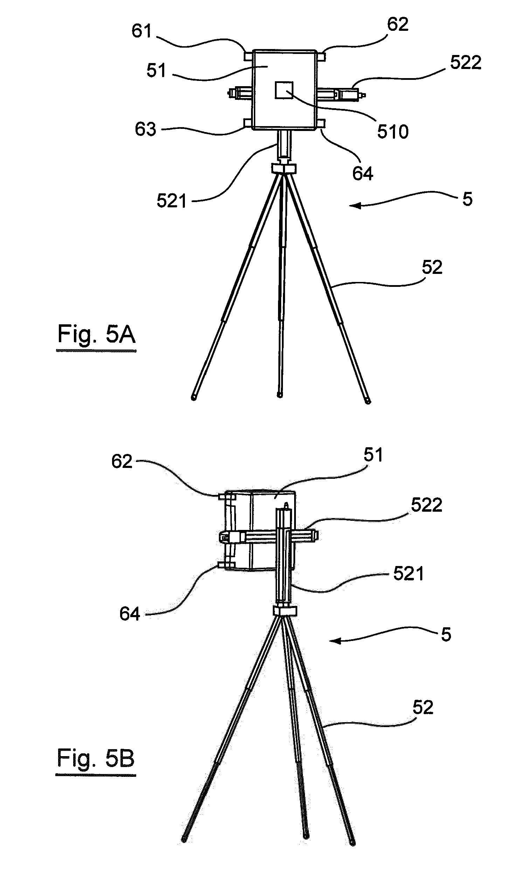

La figure 4 est une vue schématique de côté d'un équipement de mesure 5, faisant partie d'un système de contrôle d'un indicateur de trajectoire d'approche, positionné pour contrôler un feu 25 d'un dispositif de type PAPI. L'équipement de mesure 5, qui est représenté plus en détail sur les figures 5A et 5B, comprend un boîtier 51, portant un ensemble de mesure, porté par un trépied 52. Il est placé à une distance prédéterminée 501 du feu 25, qui peut être par exemple de 5 ou 10 mètres, dans le faisceau lumineux émis par celui-ci.

### Prépositionnement du boîtier dans l'axe optique par réglage du trépied

Le boîtier 51 présente une ouverture de vision 510, qui est par exemple constituée par une zone vitrée dans la paroi du boîtier 51 qui est tournée vers le feu 25 à contrôler. La hauteur du trépied 52 est réglable, de telle sorte que cette ouverture de vision 510 puisse être placée à la hauteur souhaitée. De préférence, cette ouverture de vision 510 est positionnée de façon à être au niveau de l'axe optique théorique du feu à contrôler. Par exemple, sur un sol plat, la hauteur du trépied 52 est choisie de telle sorte que l'ouverture de vision 510 soit à une hauteur H du sol déterminée de la façon suivante :

$$H = D*\tan(\theta) + h$$

avec :

- D : distance 501 entre le feu 25 et l'équipement 5 ;
- $\theta$ : l'angle de site théorique de l'axe optique du feu 25 ;
- h : hauteur du feu 25 par rapport au sol.

### Caméra unique dans le boîtier

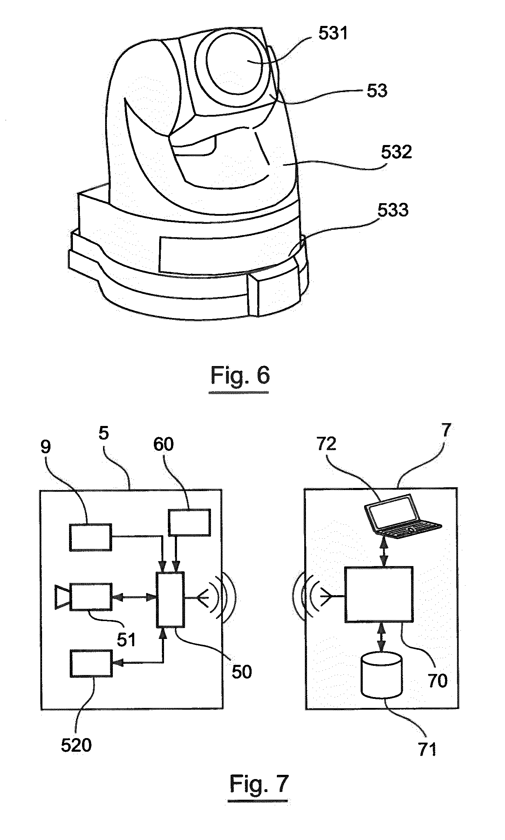

Le boîtier 51 contient une unique caméra 53 du type représenté à la figure 6 dont l'objectif 531 est situé derrière l'ouverture de vision 510 du boîtier 51. Cette caméra est montée pivotante autour d'un axe horizontal par rapport à un support intermédiaire 532, lui-même pivotant autour d'un axe vertical par rapport à un socle 533, de façon à pouvoir modifier l'angle de site et l'azimut de la caméra. Chacun de ces pivotements est piloté par un système intégré au bloc caméra assurant l'asservissement et le contrôle des mouvements de la caméra lors des acquisitions. De préférence, ces mouvements sont commandés par un programme informatique permettant de diriger automatiquement la caméra dans la direction du feu à contrôler, à partir du moment où ce feu a été identifié sur les images captées par la caméra.
De façon avantageuse, la caméra choisie comporte un objectif motorisé offrant un zoom x 18 à mise au point automatique, un débattement d'angle de site entre - 30° et + 90°, et une plage d'azimut de -170° à +170°. Cette caméra est de type numérique et comporte préférentiellement un capteur de type CCD (Charge-Coupled Device, ou dispositif à transfert de charge).

Capteurs photométriques associés au boîtier.

Par ailleurs, comme le représentent les figures 5A et 5B, des capteurs photométriques de luminosité 61, 62, 63 et 64, comprenant par exemple des photodiodes, placés sur le boîtier 51 permettent de mesurer l'éclairement lumineux issu du feu 25 à contrôler, exprimé en lux. La distance entre les capteurs 61, 62, 63 et 64 et le feu 25 étant prédéterminée et connue, ces mesures de l'éclairement lumineux permettent de calculer directement l'intensité lumineuse du feu 25, exprimée en Candelas. De préférence, plusieurs de ces capteurs, par exemple quatre, sont fixés en différents points du boîtier, par exemple à proximité des quatre coins du boîtier, afin de mesurer l'éclairement lumineux en plusieurs points du faisceau lumineux. Préférablement et avantageusement, ces capteurs seront positionnés sur des équerres rétractables. Il est ainsi possible de les placer à la distance souhaitée du boîtier pour les mesures, et de les replier pour le transport de l'équipement de mesure.

Système de déplacement motorisé du boîtier

Le boîtier 51 est fixé sur le trépied 52 par l'intermédiaire d'un système de déplacement motorisé comprenant une glissière, ou rail vertical 521 fixé sur le trépied 52, dans lequel peut coulisser un coulisseau lié à une glissière, ou rail horizontal 522, dans lequel peut coulisser un coulisseau lié au boîtier 51. Ces rails 521 et 522 permettent le déplacement du boîtier 51 dans les directions verticale et horizontale, dans un plan sensiblement perpendiculaire à l'axe optique du faisceau émis par le feu 52. De façon avantageuse, ils permettent une amplitude de déplacement du boîtier 51 de l'ordre de 40 cm dans les directions verticale et horizontale.

Ces déplacements le long des rails sont contrôlés par des servomoteurs électriques. Préférentiellement, pour le positionnement initial de l'équipement de mesure face au feu PAPI à contrôler, avant les premières mesures, le boîtier 51 occupe une position médiane correspondant sensiblement au milieu de chacun des rails 521 et 522.

Positionnement précis de la caméra

Une fois l'équipement de mesure mis en place, la caméra 53 commence à relever les images du feu à contrôler, son zoom étant dans une position offrant un faible grossissement et un grand angle de champs. Le boîtier 51 est alors déplacé automatiquement par le système de déplacement motorisé, de façon à obtenir un positionnement précis de l'ouverture de vision 510, et donc de l'objectif 531 de la caméra 53, sur l'axe optique du faisceau émis par le feu 25 à contrôler. L'image captée par la caméra 53 est analysée pendant ces déplacements pour diriger le boîtier 51 vers une position alignée précisément sur l'axe optique du feu 25, et identifier cette bonne position.

Plus précisément, le boîtier 51 est bien positionné quand :

• l'image du feu 25 captée par la caméra 53 correspond à un disque ;
• la transition entre les parties de faisceau rouge et blanche est bien au milieu de l'image du feu 25 captée par la caméra.

Si la transition entre les parties de faisceau rouge et blanche est inclinée par rapport à l'horizontale, il est nécessaire de régler le positionnement du filtre rouge dans le projecteur du feu 25 avant de poursuivre le positionnement précis du boîtier 51. Un message est communiqué à cet effet à l'opérateur effectuant le contrôle.

Relevé de l'angle de site et de l'image du feu

Quand le boîtier 51 est dans la bonne position, dans laquelle la caméra 53 est située précisément au niveau de l'axe optique du feu 25, au niveau de la transition entre le rouge et le blanc, la caméra 53 zoome sur ce feu, pour en avoir une image précise, et est orientée précisément dans la direction de ce feu 25 par le support 532. Une plateforme gyroscopique fixée sur la caméra 53 relève alors l'inclinaison de celle-ci par rapport à l'horizontale. Cet angle correspond à l'angle de site de l'axe optique du feu.

Dans le mode de réalisation représenté, la plateforme gyroscopique utilisée est un système de mesure inertielle complet intégré en un composant électronique mesurant six axes, dont trois axes de rotation et trois axes de mesure d'accélération. Un étalonnage approprié, effectué à la mise en service de l'équipement de mesure, permet que ce gyroscope indique précisément l'inclinaison de la caméra 53 dans un référentiel galiléen ;

Par ailleurs, l'image relevée dans cette position par la caméra 53 est analysée pour vérifier la précision de la transition entre les couleurs rouge et blanche, et les caractéristiques chromatiques des couleurs.

Il est à noter que la caméra 53 comprenant un zoom motorisé, elle peut être utilisée efficacement à la fois pour identifier la position du feu afin de permettre le positionnement précis du boîtier 51, avec un zoom relativement faible, et pour prendre une image précise du feu pouvant permettre une analyse de ses caractéristiques photométriques et chromatique, avec un zoom plus important.

Mesures de luminosité

Enfin, les capteurs de luminosité fixés sur le boîtier peuvent relever l'éclairement lumineux en plusieurs points autour de l'axe optique du feu 25. A partir de la position du boîtier 51 dans laquelle la caméra 53 est placée précisément sur l'axe optique du feu 25, le boîtier 51 peut être déplacé par le système de déplacement motorisé afin de déplacer les différents capteurs de luminosité vers des points prédéterminés autour de l'axe optique du feu 25, afin d'effectuer plusieurs séries de mesure de l'éclairement lumineux. Ces mesures de la luminosité peuvent notamment permettre de calculer l'angle d'ouverture du feu 25 et permettent de réaliser le diagramme isocandela du faisceau émis dans les couleurs blanche et rouge.

Il est à noter que les mesures de luminosité fournies par les capteurs de luminosité 61 à 64 permettent une mesure de l'éclairement lumineux beaucoup plus précis, et avec un risque d'erreur beaucoup moins important que la caméra.

Traitement des données

Les différents composants impliqués dans la mesure :

- la caméra 53 (fournissant des images) ;
- système d'asservissement et de contrôle des mouvements de la caméra 53, autour de l'axe vertical et autour de l'axe horizontal, et de la position du zoom (fournissant des données correspondant à l'angle de la caméra et à la position du zoom) ;
- les servomoteurs commandant le déplacement vertical et horizontal du boîtier 51 le long de rails portés par le trépied 52 (fournissant des données correspondant à la position de la caméra) ;
- le gyroscope fixé à la caméra (fournissant des données correspondant à la position angulaire précise de la caméra par rapport à un référentiel galiléen étalonné préalablement) ;
- les capteurs de luminosité 61 à 64 portés par le boîtier 51

sont connectés entre eux par l'intermédiaire d'un réseau local (« LAN pour Local Area Network ») assurant la communication rapide et sécurisée des informations de contrôle/commande, ainsi que le recueil des données acquises. Toutes ces données sont converties en données binaires par un convertisseur placé dans le boîtier 51, et sont envoyées par un module de communication wifi placé dans le boîtier 51 vers un ordinateur 7 permettant leur traitement et assurant l'interface avec l'opérateur.

Dispositif de contrôle

Le dispositif de contrôle d'un indicateur de trajectoire d'approche pour l'atterrissage d'un avion, selon le mode de réalisation représenté, comprend l'équipement de mesure 5 et l'ordinateur 7 permettant de commander l'équipement de mesure 5 et de traiter les données relevées par cet équipement.

La figure 7 est une représentation schématique de l'architecture de ce dispositif. Cette figure représente l'équipement de mesure 5 et l'ordinateur 7.

L'équipement de mesure comprend la caméra 51 qui communique ses images au convertisseur 50. Les servomoteurs associés à la caméra 51, qui commandent son pivotement et son zoom, reçoivent des commandes du convertisseur 50 et lui communiquent les informations représentatives de leur position.

De la même façon, les servomoteurs du système de déplacement motorisé 520 reçoivent des commandes du convertisseur 50 et lui communiquent les informations représentatives de leur position.

Enfin, la plate-forme gyroscopique 9 et les capteurs de luminosité 60 communiquent au convertisseur 50 les données qu'ils mesurent.

Le convertisseur 50 convertit toutes ces données et les communique à l'ordinateur 7, qui peut par exemple être un ordinateur portable placé dans un véhicule à proximité de l'équipement de mesure 5. Ces données reçues par l'ordinateur 7 sont traitées par un logiciel dédié 70, qui a accès à une base de données 71 comprenant des informations sur les feux à contrôler, telles que le nom de la piste, la position du feu, son inclinaison théorique, etc. Par ailleurs, ce logiciel permet les interactions avec un opérateur par le bais de l'interface homme-machine 72 de l'ordinateur.

L'opérateur peut donc effectuer les opérations de contrôle d'un feu PAPI, et notamment contrôler le fonctionnement de l'équipement de mesure 5, par l'intermédiaire de l'interface homme-machine 72 de l'ordinateur.

Le logiciel 70, à partir des informations qui lui sont communiquées par l'équipement de mesure 5, peut déterminer les paramètres suivants :

- l'angle d'élévation de chaque feu d'un système PAPI ;
- l'angle d'inclinaison de la transition couleur de chaque feu par rapport à l'horizontale ;
- l'épaisseur en degrés de la transition entre les couleurs rouge et blanche de chaque feu du système PAPI ;
- le diagramme d'intensité (ou de luminance) de chaque feu ;
- le diagramme de chromaticité de chaque feu.

A partir de ces paramètres, le logiciel peut calculer les corrections à apporter au système PAPI et notamment :

- l'inclinaison du système PAPI dans son ensemble ;
- la qualité optique et l'alignement des lentilles ;
- l'alignement des filtres rouges ;
- l'alignement de l'ouverture des réflecteurs elliptiques ;
- la collimation (en élévation et en transition) des faisceaux lumineux de chaque feu ;
- l'angle d'ouverture azimutale de chaque feu ;
- le parallélisme des faisceaux des feux par rapport à l'axe de la piste ;
- l'inclinaison selon l'axe longitudinal (également appelée « angle roll ») du système PAPI ;
- l'inclinaison selon l'axe longitudinal (également appelée « angle roll ») de chaque filtre rouge.

## Revendications

1. Equipement mobile de mesure (5) des caractéristiques d'un faisceau lumineux émis par un feu (25), présentant au moins deux portions angulaires de couleurs différentes, ledit équipement comprenant un support (532) permettant de faire varier la position d'un ensemble de mesure, **caractérisé en ce que** ledit ensemble de mesure comprend une unique caméra (53) orientable, équipée d'un zoom pouvant prendre au moins deux positions :

   . une première position de faible grossissement, offrant un faible grossissement et un grand angle de champs, permettant de détecter la position du feu (25) pour orienter précisément la caméra (53) dans sa direction ;
   . une seconde position de fort grossissement, permettant de réaliser une image du feu (25) permettant d'analyser les caractéristiques d'un faisceau lumineux émis par un feu (25).

2. Equipement mobile de mesure (5) selon la revendication 1, **caractérisé en ce que** ledit ensemble de mesure comprend au moins une plate-forme inertielle fixée à ladite caméra (53), permettant d'en mesurer l'inclinaison.

3. Equipement mobile de mesure (5) selon l'une quelconque des revendications précédentes, **caractérisé en ce que** ledit ensemble de mesure comprend au moins un capteur de luminosité (61, 62, 63, 64) distinct de ladite caméra.

4. Equipement mobile de mesure (5) selon l'une quelconque des revendications précédentes, **caractérisé en ce que** ledit ensemble de mesure comprend un boîtier (51) contenant ladite caméra (53).

5. Equipement mobile de mesure (5) selon les revendications 3 et 4, **caractérisé en ce que** ledit ou lesdits capteurs de luminosité (61, 62, 63, 64) sont placés sur des équerres rétractables portées par ledit boîtier (51).

6. Equipement mobile de mesure (5) selon l'une quelconque des revendications précédentes, **caractérisé en ce que** ledit support (532) est constitué d'un pied portant un système de déplacement motorisé (520) dudit ensemble de mesure.

7. Dispositif de contrôle d'un feu (25) comprenant :

   • un équipement mobile de mesure (5) selon l'une quelconque des revendications précédentes, et
   • un ordinateur (7) permettant le traitement des données de l'équipement mobile de mesure (5) et une interface (72) avec un opérateur.

8. Dispositif de contrôle selon la revendication 7, **caractérisé en ce que** ledit équipement mobile de mesure (5) et ledit ordinateur (7) communiquent par une liaison radio de type wifi.

9. Dispositif selon l'une quelconque des revendications 7 et 8, **caractérisé en ce que** ledit ordinateur (7) accède à une base de données comprenant des informations concernant chacun des feux (25) à contrôler.

**Patentansprüche**

1. Mobile Vorrichtung (5) zum Messen der Eigenschaften eines Lichtstrahls, der von einem Scheinwerfer (25) emittiert wird, der mindestens zwei Winkelabschnitte mit unterschiedlichen Farben aufweist, wobei die Vorrichtung einen Träger (532) aufweist, der es ermöglicht, die Position einer Messanordnung zu variieren, **dadurch gekennzeichnet, dass** die Messanordnung eine einzige ausrichtbare Kamera (53) aufweist, die mit einem Zoom ausgestattet ist, der mindestens zwei Positionen einnehmen kann:

   - eine erste Position mit schwacher Vergrößerung, die eine schwache Vergrößerung und einen großen Feldwinkel bietet, die es ermöglicht, die Position des Scheinwerfers (25) zu erfassen, um die Kamera (53) genau in seine Richtung auszurichten;
   - eine zweite Position mit starker Vergrößerung, die es ermöglicht, ein Bild des Scheinwerfers (25) zu erstellen, das es ermöglicht, die Eigenschaften eines Lichtstrahls, der von einem Scheinwerfer (25) emittiert wird, zu analysieren.

2. Mobile Messvorrichtung (5) nach Anspruch 1, **dadurch gekennzeichnet, dass** die Messanordnung mindestens eine Trägheitsplattform aufweist, die an der Kamera (53) befestigt ist, die es ermöglicht, die Neigung davon zu messen.

3. Mobile Messvorrichtung (5) nach einem der vorhergehenden Ansprüche, **dadurch gekennzeichnet, dass** die Messanordnung mindestens einen Helligkeitssensor (61, 62, 63, 64) aufweist, der von der Kamera getrennt ist.

4. Mobile Messvorrichtung (5) nach einem der vorhergehenden Ansprüche, **dadurch gekennzeichnet, dass** die Messanordnung ein Gehäuse (51) aufweist, das die Kamera (53) enthält.

5. Mobile Messvorrichtung (5) nach einem der Ansprüche 3 und 4, **dadurch gekennzeichnet, dass** der oder die Helligkeitssensoren (61, 62, 63, 64) auf herausziehbaren Winkeln angebracht sind, die von dem Gehäuse (51) getragen sind.

6. Mobile Messvorrichtung (5) nach einem der vorhergehenden Ansprüche, **dadurch gekennzeichnet, dass** der Träger (532) aus einem Fuß gebildet wird, der ein motorisiertes Bewegungssystem (520) der Messanordnung trägt.

7. Überprüfungsvorrichtung eines Scheinwerfers (25), umfassend:

   - eine mobile Messvorrichtung (5) nach einem der vorhergehenden Ansprüche (5) und
   - einen Computer (7), der es ermöglicht, Daten der mobilen Messvorrichtung (5) zu verarbeiten, und eine Schnittstelle (72) mit einem Betreiber.

8. Überprüfungsvorrichtung nach Anspruch 7, **dadurch gekennzeichnet, dass** die mobile Messvorrichtung (5) und der Computer (7) über eine WLAN-Verbindung kommunizieren.

9. Vorrichtung nach einem der Ansprüche 7 und 8, **dadurch gekennzeichnet, dass** der Computer (7) auf eine Datenbasis zugreift, die Informationen in Bezug auf jeden der zu überprüfenden Scheinwerfer (25) enthält.

**Claims**

1. Mobile apparatus for measuring (5) characteristics of a light beam emitted by a light unit (25), presenting at least two angular portions of different colors, said apparatus comprising a support (532) that enables the position of a measuring set to vary, **characterized in that** said measuring set comprises a single orientable camera (53), equipped with a zoom element capable of taking at least two positions:

   • a first position of low magnification, offering a low magnification and a wide field angle, enabling the detection of the position of the light unit (25) to orient the camera (53) precisely in its direction;
• a second position of high magnification, enabling the taking of an image of the light unit (25) enabling an analysis of the characteristics of a light beam emitted by a light unit (25).

2.  Mobile apparatus for measuring (5) according to claim 1, **characterized in that** said measuring set comprises at least one inertial platform fixed to said camera (53), enabling its inclination to be measured.

3.  Mobile apparatus for measuring (5) according to any one of the preceding claims, **characterized in that** said measuring set comprises at least one luminosity sensor (61, 62, 63, 64) distinct from said camera.

4.  Mobile apparatus for measuring (5) according to any one of the preceding claims, **characterized in that** said measuring set comprises a case (51) containing said camera (53).

5.  Mobile apparatus for measuring (5) according to the claims 3 and 4, **characterized in that** said luminosity sensors (61, 62, 63, 64) are placed on telescopic brackets carried by said case (51).

6.  Mobile apparatus for measuring (5) according to any one of the preceding claims, **characterized in that** said support (532) is constituted by a stand carrying a system for the motor-driven shifting (520) of said measuring set.

7.  Device for checking a light unit (25) comprising:

    • a mobile apparatus for measuring (5) according to any one of the preceding claims, and
    • a computer (7) for processing data from the mobile apparatus for measuring (5), and an interface (7) with an operator.

8.  Device for checking according to claim 7, **characterized in that** said mobile apparatus for measuring (5) and said computer (7) communicate by a WiFi type radio link.

9.  Device according to any one of the claims 7 and 8, **characterized in that** said computer (7) accesses a database comprising information relating to each of the light units (25) to be checked.

Fig.1A

Fig.1B

EP 2 766 694 B1

Fig. 2A

Fig. 2B

Fig. 2C

Fig. 2D

Fig. 2E

Fig. 3

Fig. 4

EP 2 766 694 B1

Fig. 5A

Fig. 5B

531

53

532

533

<u>Fig. 6</u>

9    5    60        72    7

51

520    50

70

71

<u>Fig. 7</u>

**EP 2 766 694 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20110032519 A